# EUROPEAN PATENT SPECIFICATION

(11) **EP 2 537 568 B1**
(45) Date of publication and mention of the grant of the patent: **21.04.2021**
(21) Application number: 11305800.2
(22) Date of filing: 23.06.2011
(51) Int. Cl.: A63F 13/79, A63F 13/31

(54) **Method and apparatus for enabling a user to participate in a remotely accessible electronic game**
Verfahren und Vorrichtung zur Ermöglichung eines Benutzers zur Teilnahme an einem elektronischen Spiel per Fernzugriff
Procédé et appareil pour permettre à un utilisateur de participer à un jeu électronique accessible à distance

(43) Date of publication of application: 26.12.2012
(73) Proprietor: ORANGE, 75015 Paris (FR)
(72) Inventor: Rancurel, Marie-Neige, London, W2 4BS (GB); Tanguy, Arnaud, London, N1 1QB (GB)
(74) Representative: Regimbeau

(56) References cited:
- EP-A1- 1 625 880
- EP-A2- 1 475 134
- US-A1- 2008 026 845
- US-A1- 2009 181 767

## Description

The present invention concerns a method and an apparatus for enabling a user to participate in a remotely accessible electronic game.

Online games have gained increasing popularity as network technology has improved and video graphics have become more sophisticated. Online games are generally hosted by remote game servers and are accessible by means of game consoles connected to a communication network. A user can use a local game console connected to a network to play the game hosted on the remote game server.

Such remotely accessible electronic games can include single player games and multiplayer games. Generally each player is associated with a respective player profile characterising the player. Multiplayer games enable a number of users using game consoles at different locations to simultaneously play the game against one another, each user having their respective player profile. Game signals received from the game consoles are used to progress the game on the game server and the game server provides game synchronisation between the different game consoles. Single games allow a user to play a game hosted on a remote server. Game control signals from the single user game console are used to progress the game.

US2009/181767 discloses a method for inviting a user to join an online game. The invitation is sent by a user to another user by means of an Instant Messaging (IM) service. The inviter creates an IM for all contacts (i.e. the invitees) of the inviter according to the detailed game information provided by the game server. If some of the invitees decide to join the game, the inviter requests the game server to allocate game resources, the users can then be added to the online game.

There are occasions when a player participating in a game hosted on a remote server must leave the game console he is using. In some cases it may be desirable for the player to be able to continue playing the same game he has left using a different terminal device.

The present invention has been devised to address one or more of the foregoing concerns.

According to a first aspect of the invention there is provided a user terminal device for enabling a user to participate in a remotely accessible electronic game for one or more players, the user terminal device comprising: game application means for supporting a game application for execution of the electronic game; request processing means for processing a game participation request initiated by a player of the electronic game to request the user of the user terminal device to join the electronic game, the game participation request providing access to game synchronisation data for synchronising with the electronic game; and activation means for activating the game application, in response to the request, using the game synchronisation data enabling the user to participate in the electronic game.

Accordingly, the game participation request enables a user playing a remotely accessible electronic game on a game console to continue playing the same game on another user terminal device such as a mobile communication device by accessing game synchronisation data for synchronising with the game, which may be ongoing between other players of the game.

In an embodiment, the or each participating player of the electronic game is associated with player profile data characterising the status of the respective player in the electronic game, and the electronic game is associated with game status information characterising the status of the game; wherein the game participation request provides access to player profile data for obtaining up-to-date player profile data of the player requested to join the electronic game and the game synchronisation data for synchronising with the electronic game is based on the up-to-date game status information.

Accordingly, the user is able to continue playing the same game in terms of his player profile status saved prior to leaving the game console.

The electronic game is an electronic game in which the player has already participated and the up-to-date player profile data comprises player profile data characterising the last saved player profile data of the player in the game.

In a particular embodiment the electronic game may be an ongoing multiplayer electronic game played by one or more other players and the game synchronisation data enables synchronisation of execution of the game with the ongoing game. The game participation request may be initiated by another player of the multiplayer game.

In an embodiment the game participation request includes at least one of an address indication for indicating a location on a remote server from where the up to date player profile data may be retrieved, a game address indicating a location from where software for the game application may be downloaded and a game synchronisation address indicating a location from where game synchronisation data can be retrieved.

In a particular embodiment the user terminal is operable to transmit user authentication data for authentication of the user to join the electronic game.

The game participation request may be received as at least one of an email message and a short message service text message.

In a particular embodiment the user terminal is configured to automatically detect generation of a user control signal, and to transmit data representative of the control signal to the remote game server

The device may include user interaction means for generating a control signal for controlling the game in response to an action of the user. For example, the user interaction means may include an accelerometer to provide a game control signal according to movement of the user terminal

According to a second aspect of the invention there is provided a game console device for enabling a user to participate in a remotely accessible electronic game for one or more players, the game console device comprising: application means for supporting a game application for executing the electronic game; and notification means for initiating a game participation request requesting a player to join the electronic game wherein the game participation request provides access to game synchronisation data for synchronising with the game.

According to a third aspect of the invention there is provided a game server device for hosting a remotely accessible electronic game for one or more players comprising: game application means for executing a game application for execution of the electronic game and synchronising the status of the game on remote terminals based on the game status data; request processing means for establishing a game participation request initiated by a player of the electronic game to request a player to join the electronic game, the game participation request providing access to game synchronisation data for synchronising with the game; and transmission means for transmitting the request to a network service provider server for transmission to a user terminal.

According to a fourth aspect of the invention there is provided a method for enabling a user of a user terminal device to participate in a remotely accessible electronic game for one or more players, comprising: receiving a game participation request from a player of the electronic game to request the user of the user terminal device to join the electronic game, the game participation request providing access to game synchronisation data for synchronising with the game; retrieving the game synchronisation data; and activating the electronic game using the game synchronisation data enabling the user to participate in the electronic game.

According to a fifth aspect of the invention there is provided a method for enabling a user of a user terminal device to participate in a remotely accessible electronic game for one or more players, wherein the or each participating player of the electronic game is associated with player profile data characterising the status of the respective player in the electronic game, and the electronic game is associated with game status information characterising the status of the game, the method comprising: executing the game in accordance with game algorithms, a user control signal generated in response to an action of the user and the game status data; and initiating a game participation request requesting a player to join the electronic game wherein the game participation request provides access to game synchronisation data for synchronising with the game.

According to a sixth aspect of the invention there is provided a method for enabling a user of a user terminal device to participate in a remotely accessible electronic game for one or more players, comprising: executing a game application for execution of the electronic game and synchronising the status of the game on remote terminals based on game synchronisation data; establishing a game participation request initiated by a player of the electronic game to request a player to join the electronic game, the game participation request providing access to game synchronisation data for synchronising with the game; and transmitting the request to a network service provider server for transmission to a user terminal.

In embodiments of the different aspects of the invention the or each participating player of the electronic game is associated with player profile data characterising the status of the respective player in the electronic game, and the electronic game is associated with game status information characterising the status of the game ; and the game participation request provides access to player profile data for obtaining up-to-date player profile data of the player requested to join the electronic game and the game synchronisation data for synchronising with the electronic game is based on the up-to-date game status information.

The electronic game may be an electronic game in which the player has already participated and the up-to-date player profile data comprises player profile data characterising the last saved player profile data of the player in the game. The electronic game may be an ongoing multiplayer electronic game played by one or more other players and the game synchronisation data enables synchronisation of execution of the game with the ongoing game.

The game participation request may be initiated by another player of the multiplayer game.

In a particular embodiment the game participation request includes at least one of an address indication for indicating a location on a remote server from where the up to date player profile data may be retrieved, a game address indicating a location from where software for the game application may be downloaded and a game synchronisation address indicating a location from where game synchronisation data can be retrieved.

User authentication data may be used for authentication of the user to join the electronic game.

The game participation request may be received or transmitted as at least one of an email message and a short message service text message.

Generation of a user control signal may be automatically detected, and t data representative of the control signal may be transmitted to the remote game server.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

Embodiments of the invention will now be described, by way of example only, and with reference to the following drawings in which:-
Figure 1 is a schematic diagram of an architecture of a game system in which one or more embodiments of the invention may be implemented;
Figure 2A is a schematic block diagram of a game server device according to at least one embodiment of the invention;
Figure 2B is a schematic block diagram illustrating in more detail components elements of the game server device of Figure 2A;
Figure 3 is a schematic block diagram of a game console device according to at least one embodiment of the invention;
Figure 4 is a schematic block diagram of a mobile user terminal device according to at least one embodiment of the invention; and
Figure 5 is a communication diagram illustrating steps of a method for enabling a user to participate in a remotely accessible electronic game.

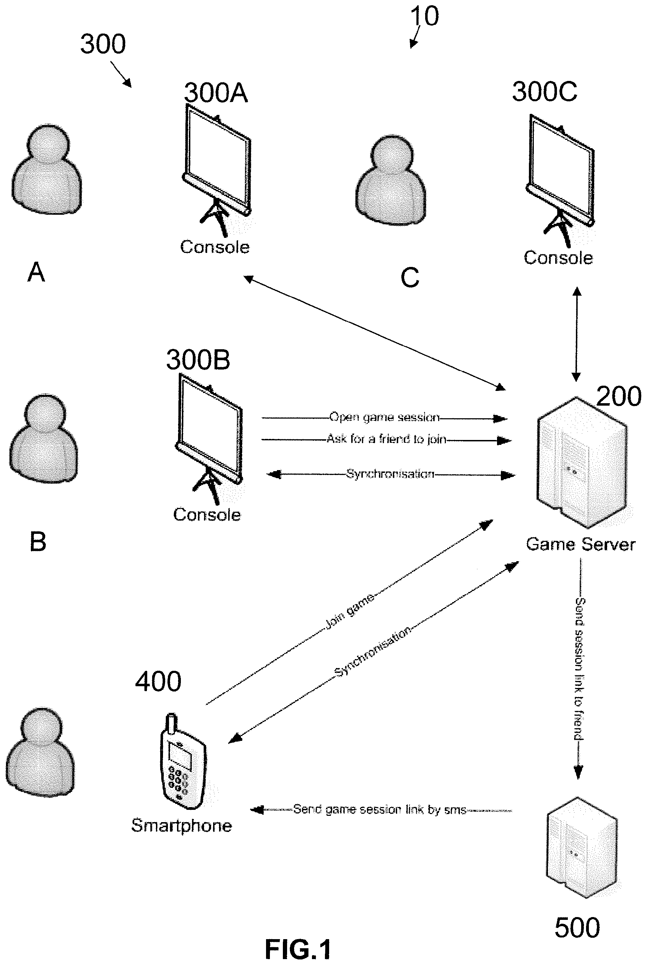

Figure 1 schematically illustrates an architecture of a game system 10 in which one or more embodiments of the invention may be implemented. Referring to Figure 1 the game system 10 comprises a game server 200, game console devices 300A, 300B and 300C operated by users A, B and C respectively, a mobile terminal device 400 operable by any of the users A, B and C, and a network service provider server 500. The game console devices 300A, 300B and 300C are connectable via one or more networks to the game server 200. The game server 200 is connectable via one or more networks to the network service provider server 500. The networks may be fixed networks or wireless networks. The mobile terminal 400 is connectable to the network service provider server 500 and the game server 200 via at least one or more wireless networks.

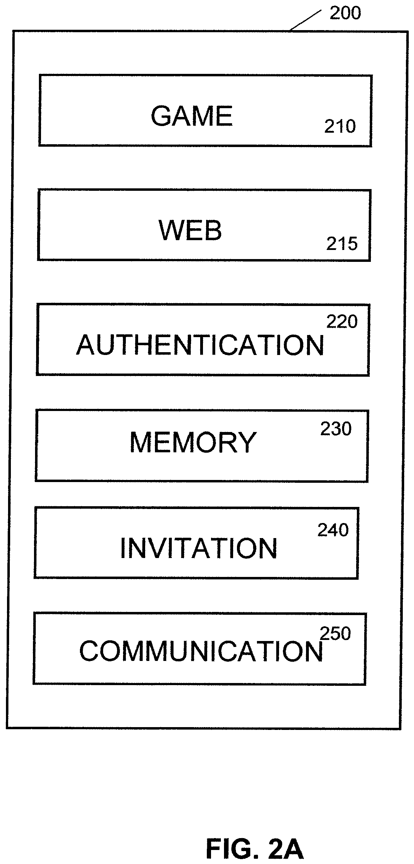

Figure 2A is a schematic block diagram illustrating components of a game server 200 in accordance with an embodiment of the invention. Referring to Figure 2A, the game server 200 includes a game application module 210 for executing game program code, a web service application module 215 hosting a web service enabling a user of a game console 300A, 300B, 300C to interact with the game server 200, a player authentication module 220 for performing authentication of players of the game, a memory 230 for storing game status data and player status data, an invitation application module 240 for managing an invitation for transmission to another player to invite the player to join the game, and a communication interface 250 for interfacing with one or more networks for communication with game consoles 300, mobile terminal device 400 and network service provider server 500.

Game application module 210 executes game program code configured to perform game operation functions in accordance with one or more game algorithms for the particular multi-player electronic game and provides game data to gaming devices including game console devices 300A, 300B, 300C and mobile terminal device 500 in response to user control signals received therefrom and execution of the game algorithms. Implementation of the multi-player electronic game involves a game set-up phase and a game play phase. In the game set up phase a player profile is established for each player in accordance with player information input and/or selected by the player and an initial game status is provided to each gaming device. The player profile information may include information relevant to each player of the multiplayer game such as the name of the player, the number of remaining lives, the amount of remaining ammunition or weapons, energy levels, player location, player team members, etc. The initial game status information includes data defining the initial conditions of the game. During the game play phase the status of the game is updated according to the game operation and the control signals received from the gaming devices. Updated game operation data is then provided to the game consoles 300 and the mobile terminal device 400. The game operation data provided by the game server enables synchronisation of the multiplayer electronic game between the game consoles 300 and the mobile terminal 400. In this way the video data displayed on the screen of game console 300A will be synchronised with the video data displayed on the screen of game console 300B or 300C in accordance with the progress of the game.

In some embodiments of the invention the game operating data provided by the game server 200 may comprise game control signals for controlling video devices on the gaming devices to enable game video data for display on the video screen associated with the game console device 200 or the mobile terminal 400 to be locally generated; and for controlling audio devices for locally generating game audio data thereby synchronising actions of the gaming device with the game server. In other embodiments the game operation data may include game video and/or audio content generated by the game server and streamed to the gaming device. Such video and audio content data may be provided as compressed data. For example the video data may be compressed in accordance with scalable video coding techniques or the like. In some embodiments the game data may include both game video and audio content data and game control signals.

During the game set-up phase, the player authentication module 220 verifies the player authentication data received from game console devices 300 and mobile terminal device 400 and performs player registration in order to enable a game session to be started or resumed by the respective player. The player authentication module may be connected to a remote database 600 for retrieval of authentication data or may retrieve authentication data from a memory local to the game server 200. In response to the verification process a player may be allowed or refused access to the game.

Memory 230 which may include a RAM and a ROM stores game status data, player status data for retrieval and other game related data.

Communication interface 250 provides an interface for connecting to wireless and/or fixed networks for communication with game consoles 300, mobile terminal device 400 and network service provider server 500.

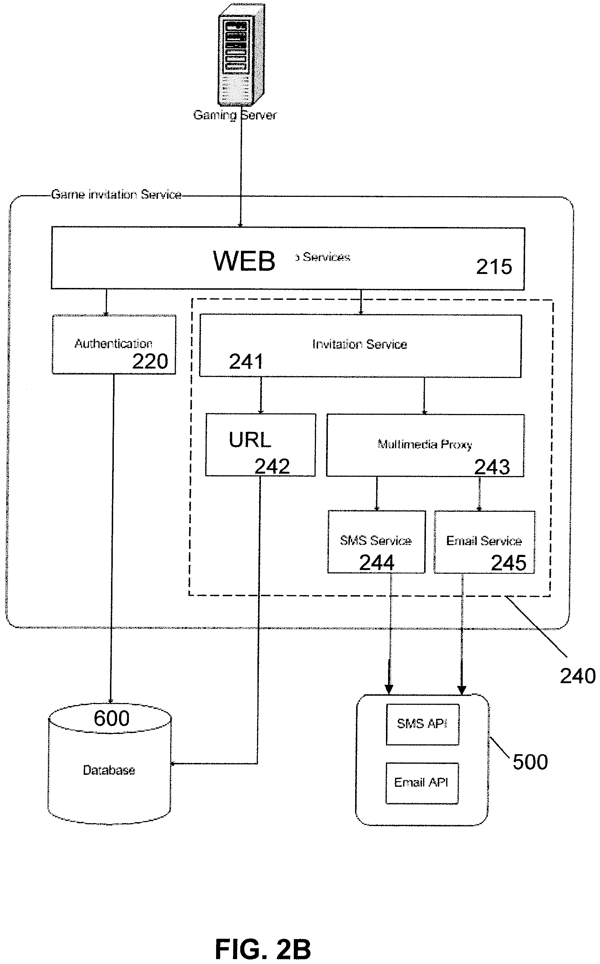

Figure 2B illustrates in more detail components of the game invitation module 240 of the game server which is configured to provide an invitation for transmission via a Short messaging service (SMS) or via an email service to a user of mobile terminal 400. The game invitation module 240 comprises an invitation service module 241, a url service module 242, a multimedia proxy 243 connected to an SMS service module 244 and an email service module 245. An invitation for transmission to a user of a mobile terminal device 400 to join the game is established by the invitation service module 241 and transmitted to a network service server 500 via the SMS service module 244 in the form of a SMS message or via the email service module 245 in the form of an email message.

The term gaming device as applied herein includes any wireless or fixed device operable to execute program code for playing a game and to communicate via a network such as the Internet using a fixed or wireless connections. Such devices include custom designed game console devices, or devices operable as game console devices such as smart telephones, personal digital assistants, portable computers and PC tablets etc.

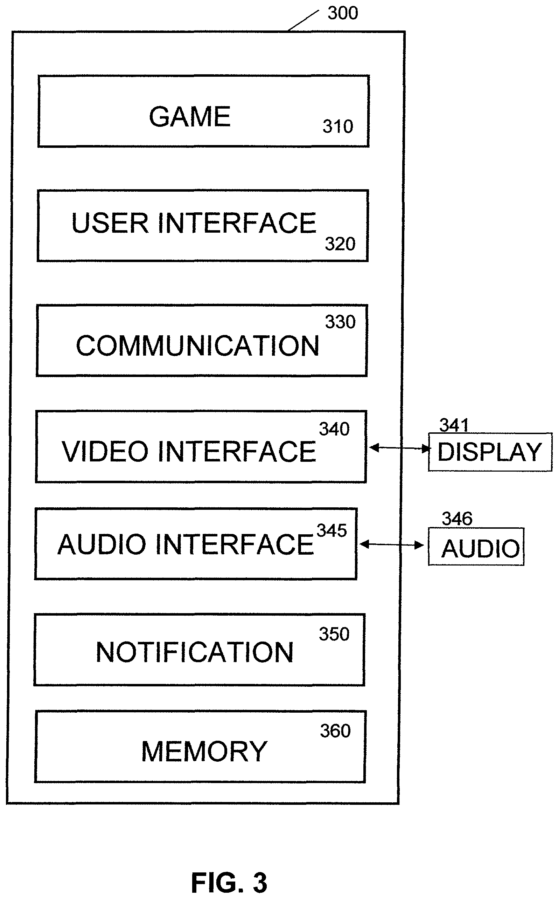

With reference to Figure 3 a game console device according to an embodiment of the invention comprises a game application module 310, a user interface 320 enabling a user to interact with the game, a communication interface 330 for connection to a network for communication with the game server 200, a video interface 340 for connection to a display screen 341, an audio interface 345 for connection with an audio device 346 such as an audio speaker, a notification processor 350 for establishing a request for another player to join a game, and a memory 360 for storing game related data.

Game application module 310 executes game program code which is configured to perform game operation functions in accordance with game algorithms for the particular multi-player electronic game and provides video data to video interface 340 and audio data to audio interface 345 in response to user control signals received from the user interface 320 and to game operation data received from the game server 200.

In one embodiment video and audio data content may be locally generated by the video interface 340 and the audio interface 345 of the game console device in accordance with the received game operation data for synchronising the game console device and the game server, user control signals received from the user interface and the game algorithms executed by the game application module 310. In other embodiments video and audio data content may be received from the game server 200 for display on the display 341 and played on the audio device 346. The video interface 340 may be configured to decode the video data before display on the display 341. The audio interface may be configured to process the audio data before playing it on audio device 346.

In the game set up phase of the electronic multi-player game an initial game status is provided to the game console 300 and a player profile is established for the game console user in accordance with player information input and/or selected by the game console user. During the game play phase the status of the game is updated according to the game operation, user control signals and updated game content received from the game server 200.

User interface 320 enables the user to interact with the game by generating a control signal in response to a user action. The user interface may be a user interface device for providing game control signals such as a joystick, a touch screen display, a keyboard, or an accelerometer. In the latter case the accelerometer is configured to provide a game control signal according to movement of the user interface 320 of the game console 300.

Communication interface 330 provides an interface for connecting to wireless and/or fixed networks for communication with the game server 300. In some embodiments of the invention the communication interface 330 may enable communication with other game console devices via wireless and/or fixed networks.

Notification processor 350 is configured to establish a request initiated by a user of the game console 300 for another player to join a game. The notification is transmitted via the communication interface 330 via a network to the game server 200. Memory 360 stores game status data, player status data for retrieval and other game related data.

In some embodiment the game console device may be provided with browser module supporting browser software enabling a user to access websites on the internet and for contacting the game server 200.

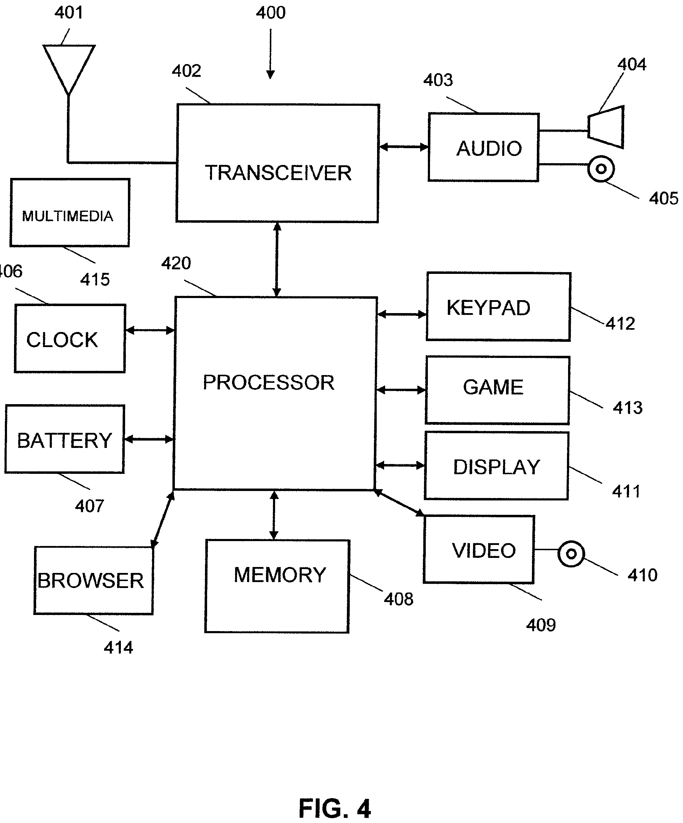

Figure 4 illustrates some of the main components of a non-limiting example of a mobile user terminal 400 that may be used in the context of the invention. Depending on the capabilities of the mobile user terminal and the supporting telecommunication networks the mobile user terminal device 400 may provide a range of voice and data communication services. As non-limiting examples the illustrated mobile user terminal provides telephone network based communication services including voice, multimedia and text messaging. The user terminal is a wireless communication device 400 comprising conventional circuitry for performing the main functions of a mobile telephone and includes one or more antennas 401 and a transceiver unit 402 for the transmission and reception of wireless signals; an audio unit 403 provided with a speaker 404 and a microphone 405; a battery 407; a memory 408, a video unit 409 with camera 410 for capturing still and/or video images, a display screen 411 for displaying information to the user and image data, a keypad for receiving a user input 412 and a processor 420. The wireless communication device 400 may include further application units such as a GPS unit for indicating the geographical location of the wireless communication device and other such units included in smart mobile wireless communication devices.

In some embodiments the display screen 411 is a touch sensitive screen on which a virtual keypad 412 can be displayed when appropriate. The memory 408 may include one or more memory circuits including non-volatile memory circuits (EEPROM, FLASH etc.) and may be used to store and retrieve game related data such as player profile data or game status data.

The key pad 412 and/or the touch sensitive screen 411 of the mobile terminal device may be used to provide a game control signals to the game server 200. In some embodiments of the invention the mobile terminal 400 may be provided with an accelerometer operable to provide a game control signal according to movement of the mobile terminal 400. In some embodiments an input signal in the form of an audio signal captured by a microphone 405 or an image or video captured by the camera 410 may be used to provide game control signals to the game server 200.

The mobile user terminal is provided with browser module 414 supporting browser software enabling a user to access websites on the internet and a multimedia module 415 for supporting multimedia applications.

The wireless communication device 400 is configured to exchange data with remote servers via a wireless network such as a 3G network, and to provide internet access. The device is operable to have applications installed, such as but not limited to game applications, email applications, social networking applications, which when executed may exchange data with the remote servers.

While in the non-limiting example illustrated in Figure 4 the user terminal 400 is a wireless mobile telephone providing the main functions of a mobile phone, it will be appreciated that the user equipment may be any other smart communication device, such as a portable laptop tablet or a fixed computer terminal.

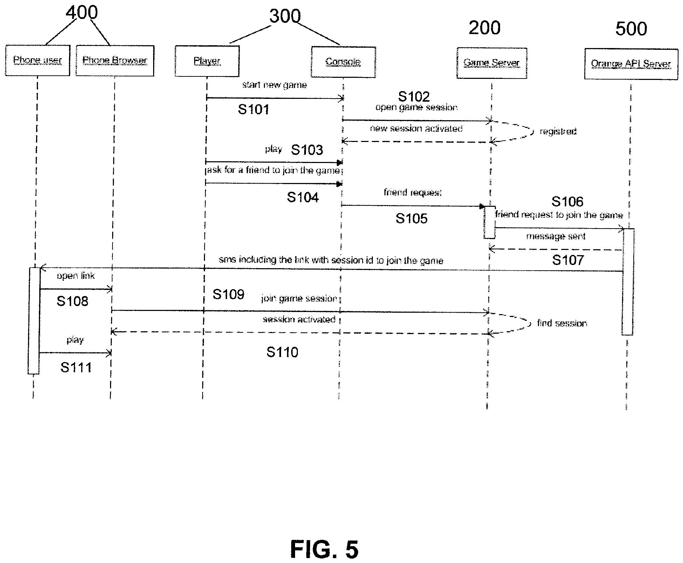

A method according to an embodiment of the invention, for enabling a user to participate in a remotely accessible multiplayer electronic game will now be described with reference to Figure 1 and Figure 5.

Initially, in step S101, player A initiates a multiplayer electronic game hosted by game server 200 via game console 300A. In step S102 a game session on game server 200 is opened and activated. In step S102 during the game set-up phase each player A, B and C registers at the game server 200 and a player profile is established for each player A, B and C respectively. Once the game session is activated and the game is underway, in step S103 the game is executed in accordance with control signals received from game consoles 300A, 300B and 300C and the game algorithms. During the game play phase the status of the game is updated according to the game operation and the status of the respective player profile is updated in accordance with progress of the game.

While the game is in progress, one of the players, for example Player C, decides to leave the game. Player profile data representative of the status of the player profile of Player C before leaving the game is saved on game server 200. Players A and B continue to play the same game that player C has left and the status of the game continues to be updated in accordance with the execution of the game algorithms and the user control signals received from game consoles 300A and 300B.

Later in step S104 player A initiates a request to invite player C to rejoin the game using player C's mobile terminal 400. The request to invite player C to join the game is established by user A on game console 300A and transmitted to game server 200 in step S105. Game server 200 establishes an invitation to be sent in the form of an SMS message or an email message via network provider server 500 to the mobile user terminal 400. The invitation contains data indicating a uniform resource locator (url) link to the ongoing game hosted on the game server 200, in which players A and B are still participating, and a session id for joining the ongoing game on the game server. The url link can also be used by the user of the mobile terminal to retrieve the player profile data last saved for player C for the ongoing game. In some embodiments of the invention the last saved player profile data may be included in the message itself. The invitation to join the game is transmitted from the game server 200 to the network service provider server 500 in step S106. A message including the invitation to join the game is sent from the network service provider server 500 to the mobile user terminal 400 in step S107.

In step S108 using browser software on the mobile user terminal 400 opens the link to the ongoing game hosted on game server 200 and joins the ongoing game session indicated by the session id in step S109. Using the provided url link the user of the mobile terminal 400 can retrieve his user profile.

In step S110 the game session between the mobile terminal 400 and the game server 200 is activated. The mobile terminal 400 is then synchronised with the ongoing game and participates in the game in step S111 by executing game software on the mobile terminal in accordance with the received player profile data and game operation data sent by the game server 200. Execution of the game on the mobile terminal 400 may be triggered by the url link.

The version of the game executed on the mobile terminal in some embodiments of the invention is a downgraded version since resources on the mobile terminal such as data processing and memory resources may be more limited compared to available resources on the game consoles 300. A downgraded version may correspond to a version of the game with lower quality image resolution, temporal resolution, or the delegation of part of the game processing to be performed on the game server 200 rather than locally on the mobile terminal 400.

While in the foregoing embodiment player C leaves the game and another player, player A initiates a request to invite player C to rejoin the game, it will be appreciated that in alternative embodiments of the invention player A may decide to leave the game and prior to leaving game console 300A save his player profile data and initiate a request to be sent to his own mobile terminal 400 to rejoin the game later using the saved player profile data. In this case other players B and C may continue to play the game. Player A will then receive the request to rejoin the game on his mobile terminal 400 as described above. Player A may then rejoin the game as described above using an url in the invitation message transmitted via game server 200 and network provider server 500 to retrieve his player profile data and synchronise with the ongoing game.

Moreover while the foregoing examples have been described in the context of a multiplayer electronic game, it will be appreciated that in a further embodiment of the invention a single player playing, by means of a game console, an electronic game hosted on a game server may decide to leave the game console and continue to play the game on his mobile terminal. Accordingly, prior to leaving game console 300A player A playing a single player game hosted on game server 200 may save his player profile data and initiate a request to be sent to his own mobile terminal 400 to rejoin the game later using the saved player profile data. The current status of the game will also be saved on game server 200. Player A will then receive the request to rejoin the game on his mobile terminal 400 as described above and rejoin the game as using an url in the invitation message transmitted via game server 200 and network provider server 500 to retrieve his player profile data and also to retrieve the game situation prior to leaving the game. Player A may then continue playing the game he was playing on game console 300A, on mobile terminal 400. The version of the game executed on mobile terminal 400 may be a downgraded version of the game executed on game console 200 as described above.

For instance, while in the foregoing examples a separate game server is provided, it will be appreciated that in some embodiments of the invention one of the game consoles 102 may operate as a game server configured to communication with the other game consoles, the network server provider and the mobile terminal.

Moreover while in the foregoing examples have been described in the context of mobile terminal communicating with the game server and the network service provider server via wireless communication networks it will be appreciated by those skilled in the art that the present invention may be applied to a fixed terminal operable to communicate via one or more fixed network.

## Claims

1. A user terminal device for enabling a user to participate in a remotely accessible electronic game for one or more players, the user terminal device comprising:
game application means for supporting a game application for execution of the electronic game;
request processing means for processing a game participation request initiated by a player of the electronic game to request the user of the user terminal device to join the electronic game, the game participation request providing access to game synchronisation data for synchronising with the electronic game; and
activation means for activating the game application, in response to the request, using the game synchronisation data enabling the user to participate in the electronic game;
**characterised in that** the remotely accessible electronic game is an ongoing multiplayer electronic game played by one or more other players in which the user is a player which has already participated, the game participation request being initiated by another player of the multiplayer game;
each participating player of the electronic game is associated with player profile data characterising the status of the respective player in the electronic game, and the electronic game is associated with game status information characterising the status of the game;
the game participation request provides access to player profile data for obtaining up-to-date player profile data of the player requested to join the electronic game and the game synchronisation data for synchronising with the electronic game is based on the up-to-date game status information, the game synchronisation data enabling synchronisation of execution of the game with the ongoing game; and
the up-to-date player profile data comprises player profile data characterising the last saved player profile data of the player in the game.

2. A user terminal device according to claim 1 wherein the game participation request includes at least one of an address indication for indicating a location on a remote server from where the up to date player profile data may be retrieved, a game address indicating a location from where software for the game application may be downloaded and a game synchronisation address indicating a location from where game synchronisation data can be retrieved.

3. A user terminal device according to any preceding claim wherein the user terminal is operable to transmit user authentication data for authentication of the user to join the electronic game.

4. A user terminal device according to any preceding claim wherein the game participation request is received as at least one of an email message and a short message service text message.

5. A user terminal device according to any preceding claim arranged to automatically detect generation of a user control signal, and to transmit data representative of the control signal to the remote game server.

6. A game server device for hosting a remotely accessible electronic game for one or more players comprising:
game application means for executing a game application for execution of the electronic game and synchronising the status of the game on remote terminals based on the game status data;
request processing means for establishing a game participation request initiated by a player of the electronic game to request a player to join the electronic game, the game participation request providing access to game synchronisation data for synchronising with the game; and
transmission means for transmitting the request to a network service provider server for transmission to a user terminal device;
**characterised in that** the remotely accessible electronic game is an ongoing multiplayer electronic game played by one or more other players in which the user is a player which has already participated, the game participation request being initiated by another player of the multiplayer game;
each participating player of the electronic game is associated with player profile data characterising the status of the respective player in the electronic game, and the electronic game is associated with game status information characterising the status of the game;
the game participation request provides access to player profile data for obtaining up-to-date player profile data of the player requested to join the electronic game and the game synchronisation data for synchronising with the electronic game is based on the up-to-date game status information, the game synchronisation data enabling synchronisation of execution of the game with the ongoing game; and
the up-to-date player profile data comprises player profile data characterising the last saved player profile data of the player in the game.

7. A method for enabling a user of a user terminal device to participate in a remotely accessible electronic game for one or more players, comprising:
receiving a game participation request from a player of the electronic game to request the user of the user terminal device to join the electronic game, the game participation request providing access to game synchronisation data for synchronising with the game;
retrieving the game synchronisation data; and
activating the electronic game using the game synchronisation data enabling the user to participate in the electronic game;
**characterised in that** the remotely accessible electronic game is an ongoing multiplayer electronic game played by one or more other players in which the user is a player which has already participated, the game participation request being initiated by another player of the multiplayer game;
each participating player of the electronic game is associated with player profile data characterising the status of the respective player in the electronic game, and the electronic game is associated with game status information characterising the status of the game;
the game participation request provides access to player profile data for obtaining up-to-date player profile data of the player requested to join the electronic game and the game synchronisation data for synchronising with the electronic game is based on the up-to-date game status information, the game synchronisation data enabling synchronisation of execution of the game with the ongoing game; and
the up-to-date player profile data comprises player profile data characterising the last saved player profile data of the player in the game.

8. A method for enabling a user of a user terminal device to participate in a remotely accessible electronic game for one or more players, the method comprising:
executing the game in accordance with game algorithms, a user control signal generated in response to an action of the user and game synchronisation data; and
initiating a game participation request requesting a player to join the electronic game wherein the game participation request provides access to the game synchronisation data for synchronising with the game;
**characterised in that** the remotely accessible electronic game is an ongoing multiplayer electronic game played by one or more other players in which the user is a player which has already participated, the game participation request being initiated by another player of the multiplayer game;
each participating player of the electronic game is associated with player profile data characterising the status of the respective player in the electronic game, and the electronic game is associated with game status information characterising the status of the game;
the game participation request provides access to player profile data for obtaining up-to-date player profile data of the player requested to join the electronic game and the game synchronisation data for synchronising with the electronic game is based on the up-to-date game status information, the game synchronisation data enabling synchronisation of execution of the game with the ongoing game; and
the up-to-date player profile data comprises player profile data characterising the last saved player profile data of the player in the game.

9. A method for enabling a user of a user terminal device to participate in a remotely accessible electronic game for one or more players, comprising:
executing a game application for execution of the electronic game and synchronising the status of the game on remote terminals based on game synchronisation data;
establishing a game participation request initiated by a player of the electronic game to request a player to join the electronic game, the game participation request providing access to game synchronisation data for synchronising with the game; and
transmitting the request to a network service provider server for transmission to a user terminal device;
**characterised in that** the remotely accessible electronic game is an ongoing multiplayer electronic game played by one or more other players in which the user is a player which has already participated, the game participation request being initiated by another player of the multiplayer game;
each participating player of the electronic game is associated with player profile data characterising the status of the respective player in the electronic game, and the electronic game is associated with game status information characterising the status of the game;
the game participation request provides access to player profile data for obtaining up-to-date player profile data of the player requested to join the electronic game and the game synchronisation data for synchronising with the electronic game is based on the up-to-date game status information, the game synchronisation data enabling synchronisation of execution of the game with the ongoing game; and
the up-to-date player profile data comprises player profile data characterising the last saved player profile data of the player in the game.

10. A computer program product for a programmable apparatus, the computer program product comprising a sequence of instructions for implementing a method according to any one of claims 7 to 9 when loaded into and executed by the programmable apparatus.

## Patentansprüche

1. Benutzerendgerätvorrichtung zum Ermöglichen, dass ein Benutzer an einem fernzugänglichen elektronischen Spiel für einen oder mehrere Spieler teilnimmt, wobei die Benutzerendgerätvorrichtung aufweist:
eine Spielanwendungseinrichtung zum Unterstützen einer Spielanwendung zur Ausführung des elektronischen Spiels;
eine Aufforderungsverarbeitungseinrichtung zum Verarbeiten einer Spielteilnahmeaufforderung, die von einem Spieler des elektronischen Spiels veranlasst wird,
um den Benutzer der Benutzerendgerätvorrichtung aufzufordern, dem elektronischen Spiel beizutreten,
wobei die Spielteilnahmeaufforderung einen Zugang zu Spielsynchronisationsdaten zum Synchronisieren mit dem elektronischen Spiel bereitstellt; und
eine Aktivierungseinrichtung zum Aktivieren der Spielanwendung als Reaktion auf die Aufforderung unter Verwendung der Spielsynchronisationsdaten, wobei dem Benutzer ermöglicht wird, an dem elektronischen Spiel teilzunehmen;
**dadurch gekennzeichnet, dass** das fernzugängliche elektronische Spiel ein laufendes elektronisches Mehrspielerspiel ist, das von einem oder mehreren anderen Spielern gespielt wird, in dem der Benutzer ein Spieler ist, der bereits teilgenommen hat, wobei die Spielteilnahmeaufforderung von einem anderen Spieler des Mehrspielerspiels veranlasst wird;
jeder teilnehmende Spieler des elektronischen Spiels Spielerprofildaten zugeordnet ist, die den Status des jeweiligen Spielers in dem elektronischen Spiel kennzeichnen, und das elektronische Spiel Spielstatusinformationen zugeordnet ist, die den Status des Spiels kennzeichnen;
die Spielteilnahmeaufforderung einen Zugang zu Spielerprofildaten zum Erlangen aktueller Spielerprofildaten des Spielers, der aufgefordert ist,
dem elektronischen Spiel beizutreten, bereitstellt und
die Spielsynchronisationsdaten zum Synchronisieren mit dem elektronischen Spiel auf den aktuellen Spielstatusinformationen basieren, wobei die Spielsynchronisationsdaten eine Synchronisation der Ausführung des Spiels mit dem laufenden Spiel ermöglichen;
und
die aktuellen Spielerprofildaten Spielerprofildaten umfassen, die die letzten gespeicherten Spielerprofildaten des Spielers in dem Spiel kennzeichnen.

2. Benutzerendgerätvorrichtung nach Anspruch 1, wobei die Spielteilnahmeaufforderung mindestens eines enthält von einer Adressangabe zum Angeben eines Ortes auf einem entfernten Server, von dem die aktuellen Spielerprofildaten abgerufen werden können, einer Spieladresse, die einen Ort angibt, von dem Software für die Spielanwendung heruntergeladen werden kann, und einer Spielsynchronisationsadresse, die einen Ort angibt, von dem Spielsynchronisationsdaten abgerufen werden können.

3. Benutzerendgerätvorrichtung nach einem vorhergehenden Anspruch, wobei das Benutzerendgerät dazu betreibbar ist, Benutzerauthentifizierungsdaten zu übertragen für die Authentifizierung des Benutzers, um dem elektronischen Spiel beizutreten.

4. Benutzerendgerätvorrichtung nach einem vorhergehenden Anspruch, wobei die Spielteilnahmeaufforderung als eine E-Mail-Nachricht und/oder eine Kurznachrichtendiensttextnachricht empfangen wird.

5. Benutzerendgerätvorrichtung nach einem vorhergehenden Anspruch, die dazu ausgebildet ist, die Erzeugung eines Benutzersteuersignals automatisch zu erfassen und Daten, die für das Steuersignal repräsentativ sind, an den entfernten Spielserver zu übertragen.

6. Spielservervorrichtung zum Hosten eines fernzugänglichen elektronischen Spiels für einen oder mehrere Spieler, die aufweist:
eine Spielanwendungseinrichtung zum Ausführen einer Spielanwendung zur Ausführung des elektronischen Spiels und zum Synchronisieren des Status des Spiels auf entfernten Endgeräten auf Grundlage der Spielstatusdaten;
eine Aufforderungsverarbeitungseinrichtung zum Erstellen einer Spielteilnahmeaufforderung, die von einem Spieler des elektronischen Spiels veranlasst wird, um einen Spieler aufzufordern, dem elektronischen Spiel beizutreten, wobei die Spielteilnahmeaufforderung einen Zugang zu Spielsynchronisationsdaten zum Synchronisieren mit dem Spiel bereitstellt; und
eine Übertragungseinrichtung zum Übertragen der Aufforderung an einen Netzwerkdienstanbieterserver zur Übertragung an eine Benutzerendgerätvorrichtung;
**dadurch gekennzeichnet, dass** das fernzugängliche elektronische Spiel ein laufendes elektronisches Mehrspielerspiel ist, das von einem oder mehreren anderen Spielern gespielt wird, in dem der Benutzer ein Spieler ist, der bereits teilgenommen hat, wobei die Spielteilnahmeaufforderung von einem anderen Spieler des Mehrspielerspiels veranlasst wird;
jeder teilnehmende Spieler des elektronischen Spiels Spielerprofildaten zugeordnet ist, die den Status des jeweiligen Spielers in dem elektronischen Spiel kennzeichnen, und das elektronische Spiel Spielstatusinformationen zugeordnet ist, die den Status des Spiels kennzeichnen;
die Spielteilnahmeaufforderung einen Zugang zu Spielerprofildaten zum Erlangen aktueller Spielerprofildaten des Spielers, der aufgefordert ist,
dem elektronischen Spiel beizutreten, bereitstellt und
die Spielsynchronisationsdaten zum Synchronisieren mit dem elektronischen Spiel auf den aktuellen Spielstatusinformationen basieren, wobei die Spielsynchronisationsdaten eine Synchronisation der Ausführung des Spiels mit dem laufenden Spiel ermöglichen; und
die aktuellen Spielerprofildaten Spielerprofildaten umfassen, die die letzten gespeicherten Spielerprofildaten des Spielers in dem Spiel kennzeichnen.

7. Verfahren zum Ermöglichen, dass ein Benutzer einer Benutzerendgerätvorrichtung an einem fernzugänglichen elektronischen Spiel für einen oder mehrere Spieler teilnimmt, das umfasst:
das Erhalten einer Spielteilnahmeaufforderung von einem Spieler des elektronischen Spiels, um den Benutzer der Benutzerendgerätvorrichtung aufzufordern, dem elektronischen Spiel beizutreten, wobei die Spielteilnahmeaufforderung einen Zugang zu Spielsynchronisationsdaten zum Synchronisieren mit dem Spiel bereitstellt;
das Abrufen der Spielsynchronisationsdaten; und
das Aktivieren des elektronischen Spiels unter Verwendung der Spielsynchronisationsdaten, wobei dem Benutzer ermöglicht wird, an dem elektronischen Spiel teilzunehmen;
**dadurch gekennzeichnet, dass** das fernzugängliche elektronische Spiel ein laufendes elektronisches Mehrspielerspiel ist, das von einem oder mehreren anderen Spielern gespielt wird, in dem der Benutzer ein Spieler ist, der bereits teilgenommen hat, wobei die Spielteilnahmeaufforderung von einem anderen Spieler des Mehrspielerspiels veranlasst wird;
jeder teilnehmende Spieler des elektronischen Spiels Spielerprofildaten zugeordnet ist, die den Status des jeweiligen Spielers in dem elektronischen Spiel kennzeichnen, und das elektronische Spiel Spielstatusinformationen zugeordnet ist, die den Status des Spiels kennzeichnen;
die Spielteilnahmeaufforderung einen Zugang zu Spielerprofildaten zum Erlangen aktueller Spielerprofildaten des Spielers, der aufgefordert ist,
dem elektronischen Spiel beizutreten, bereitstellt und
die Spielsynchronisationsdaten zum Synchronisieren mit dem elektronischen Spiel auf den aktuellen Spielstatusinformationen basieren, wobei die Spielsynchronisationsdaten eine Synchronisation der Ausführung des Spiels mit dem laufenden Spiel ermöglichen;
und
die aktuellen Spielerprofildaten Spielerprofildaten umfassen, die die letzten gespeicherten Spielerprofildaten des Spielers in dem Spiel kennzeichnen.

8. Verfahren zum Ermöglichen, dass ein Benutzer einer Benutzerendgerätvorrichtung an einem fernzugänglichen elektronischen Spiel für einen oder mehrere Spieler teilnimmt, wobei das Verfahren umfasst:
das Ausführen des Spiels gemäß Spielalgorithmen, einem Benutzersteuersignal, das als Reaktion auf eine Aktion des Benutzers erzeugt wird, und
Spielsynchronisationsdaten; und
das Veranlassen einer Spielteilnahmeaufforderung, die einen Spieler auffordert, dem elektronischen Spiel beizutreten, wobei die Spielteilnahmeaufforderung einen Zugang zu den Spielsynchronisationsdaten zum Synchronisieren mit dem Spiel bereitstellt;
**dadurch gekennzeichnet, dass** das fernzugängliche elektronische Spiel ein laufendes elektronisches Mehrspielerspiel ist, das von einem oder mehreren anderen Spielern gespielt wird, in dem der Benutzer ein Spieler ist, der bereits teilgenommen hat, wobei die Spielteilnahmeaufforderung von einem anderen Spieler des Mehrspielerspiels veranlasst wird;
jeder teilnehmende Spieler des elektronischen Spiels Spielerprofildaten zugeordnet ist, die den Status des jeweiligen Spielers in dem elektronischen Spiel kennzeichnen, und das elektronische Spiel Spielstatusinformationen zugeordnet ist, die den Status des Spiels kennzeichnen;
die Spielteilnahmeaufforderung einen Zugang zu Spielerprofildaten zum Erlangen aktueller Spielerprofildaten des Spielers, der aufgefordert ist,
dem elektronischen Spiel beizutreten, bereitstellt und die Spielsynchronisationsdaten zum Synchronisieren mit dem elektronischen Spiel auf den aktuellen Spielstatusinformationen basieren, wobei die Spielsynchronisationsdaten eine Synchronisation der Ausführung des Spiels mit dem laufenden Spiel ermöglichen; und
die aktuellen Spielerprofildaten Spielerprofildaten umfassen, die die letzten gespeicherten Spielerprofildaten des Spielers in dem Spiel kennzeichnen.

9. Verfahren zum Ermöglichen, dass ein Benutzer einer Benutzerendgerätvorrichtung an einem fernzugänglichen elektronischen Spiel für einen oder mehrere Spieler teilnimmt, das umfasst:
das Ausführen einer Spielanwendung zur Ausführung des elektronischen Spiels und das Synchronisieren des Status des Spiels auf entfernten Endgeräten auf Grundlage von Spielsynchronisationsdaten;
das Erstellen einer Spielteilnahmeaufforderung, die von einem Spieler des elektronischen Spiels veranlasst wird,
um einen Spieler aufzufordern, dem elektronischen Spiel beizutreten, wobei die Spielteilnahmeaufforderung einen Zugang zu Spielsynchronisationsdaten zum Synchronisieren mit dem Spiel bereitstellt; und
das Übertragen der Aufforderung an einen Netzwerkdienstanbieterserver zur Übertragung an eine Benutzerendgerätvorrichtung;
**dadurch gekennzeichnet, dass** das fernzugängliche elektronische Spiel ein laufendes elektronisches Mehrspielerspiel ist, das von einem oder mehreren anderen Spielern gespielt wird, in dem der Benutzer ein Spieler ist, der bereits teilgenommen hat, wobei die Spielteilnahmeaufforderung von einem anderen Spieler des Mehrspielerspiels veranlasst wird;
jeder teilnehmende Spieler des elektronischen Spiels Spielerprofildaten zugeordnet ist, die den Status des jeweiligen Spielers in dem elektronischen Spiel kennzeichnen, und das elektronische Spiel Spielstatusinformationen zugeordnet ist, die den Status des Spiels kennzeichnen;
die Spielteilnahmeaufforderung einen Zugang zu Spielerprofildaten zum Erlangen aktueller Spielerprofildaten des Spielers, der aufgefordert ist,
dem elektronischen Spiel beizutreten, bereitstellt und
die Spielsynchronisationsdaten zum Synchronisieren mit dem elektronischen Spiel auf den aktuellen Spielstatusinformationen basieren, wobei die Spielsynchronisationsdaten eine Synchronisation der Ausführung des Spiels mit dem laufenden Spiel ermöglichen;
und
die aktuellen Spielerprofildaten Spielerprofildaten umfassen, die die letzten gespeicherten Spielerprofildaten des Spielers in dem Spiel kennzeichnen.

10. Computerprogrammprodukt für eine programmierbare Vorrichtung, wobei das Computerprogrammprodukt eine Folge von Anweisungen zum Implementieren eines Verfahrens nach einem der Ansprüche 7 bis 9, wenn sie in die programmierbare Vorrichtung geladen und von dieser ausgeführt werden, aufweist.

## Revendications

1. Dispositif terminal d'utilisateur destiné à permettre à un utilisateur de participer à un jeu électronique accessible à distance prévu pour un ou plusieurs joueurs, le dispositif terminal d'utilisateur comprenant :
des moyens d'application de jeu pour supporter une application de jeu pour l'exécution du jeu électronique ;
des moyens de traitement de requête pour traiter une requête de participation au jeu initiée par un joueur du jeu électronique pour inviter l'utilisateur du dispositif terminal d'utilisateur à se joindre au jeu électronique, la requête de participation au jeu fournissant l'accès à des données de synchronisation de jeu permettant la synchronisation avec le jeu électronique ; et
des moyens d'activation pour activer l'application de jeu, en réponse à la requête, au moyen des données de synchronisation de jeu permettant à l'utilisateur de participer au jeu électronique ;
**caractérisé en ce que** le jeu électronique accessible à distance est un jeu électronique multijoueur en cours, joué par un ou plusieurs autres joueurs, auquel l'utilisateur est un joueur qui a déjà participé, la requête de participation au jeu étant initiée par un autre joueur du jeu multijoueur ;
chaque joueur participant au jeu électronique est associé à des données de profil de joueur caractérisant l'état du joueur respectif dans le jeu électronique, et le jeu électronique est associé à des informations d'état de jeu caractérisant l'état du jeu ;
la requête de participation au jeu fournit l'accès à des données de profil de joueur pour obtenir des données de profil de joueur actualisées du joueur invité à se joindre au jeu électronique et les données de synchronisation de jeu permettant la synchronisation avec le jeu électronique sont basées sur les informations d'état de jeu actualisées, les données de synchronisation de jeu permettant la synchronisation de l'exécution du jeu avec le jeu en cours ; et
les données de profil de joueur actualisées comprennent des données de profil de joueur caractérisant les dernières données de profil de joueur sauvegardées du joueur dans le jeu.

2. Dispositif terminal d'utilisateur selon la revendication 1 dans lequel la requête de participation au jeu comporte au moins une parmi une indication d'adresse pour indiquer un emplacement d'un serveur distant à partir duquel les données de profil de joueur actualisées peuvent être recouvrées, une adresse de jeu indiquant un emplacement à partir duquel un logiciel de l'application de jeu peut être téléchargé et une adresse de synchronisation de jeu indiquant un emplacement à partir duquel des données de synchronisation de jeu peuvent être recouvrées.

3. Dispositif terminal d'utilisateur selon n'importe quelle revendication précédente dans lequel le terminal d'utilisateur est exploitable pour transmettre des données d'authentification d'utilisateur pour authentifier l'utilisateur pour se joindre au jeu électronique.

4. Dispositif terminal d'utilisateur selon n'importe quelle revendication précédente dans lequel la requête de participation au jeu est reçue sous forme d'au moins un courriel et d'un message texte SMS.

5. Dispositif terminal d'utilisateur selon n'importe quelle revendication précédente agencé pour détecter automatiquement la génération d'un signal de commande d'utilisateur, et transmettre des données représentatives du signal de commande au serveur de jeu distant.

6. Dispositif serveur de jeu pour héberger un jeu électronique accessible à distance prévu pour un ou plusieurs joueurs comprenant :
des moyens d'application de jeu pour exécuter une application de jeu pour l'exécution du jeu électronique et synchroniser l'état du jeu sur des terminaux distants sur la base des données d'état de jeu ;
des moyens de traitement de requête pour établir une requête de participation au jeu initiée par un joueur du jeu électronique pour inviter un joueur à se joindre au jeu électronique, la requête de participation au jeu fournissant l'accès à des données de synchronisation de jeu pour la synchronisation avec le jeu ; et
des moyens de transmission pour transmettre la requête à un serveur de fournisseur de services réseau en vue de sa transmission à un dispositif terminal d'utilisateur ;
**caractérisé en ce que** le jeu électronique accessible à distance est un jeu électronique multijoueur en cours, joué par un ou plusieurs autres joueurs, auquel l'utilisateur est un joueur qui a déjà participé, la requête de participation au jeu étant initiée par un autre joueur du jeu multijoueur ;
chaque joueur participant au jeu électronique est associé à des données de profil de joueur caractérisant l'état du joueur du jeu électronique respectif, et le jeu électronique est associé à des informations d'état de jeu caractérisant l'état du jeu ;
la requête de participation au jeu fournit l'accès à des données de profil de joueur pour obtenir des données de profil de joueur actualisées du joueur invité à se joindre au jeu électronique et les données de synchronisation de jeu pour la synchronisation avec le jeu électronique sont basées sur les informations d'état de jeu actualisées, les données de synchronisation de jeu permettant la synchronisation de l'exécution du jeu avec le jeu en cours ; et
les données de profil de joueur actualisées comprennent des données de profil de joueur caractérisant les dernières données de profil de joueur sauvegardées du joueur dans le jeu.

7. Procédé pour permettre à un utilisateur d'un dispositif terminal d'utilisateur de participer à un jeu électronique accessible à distance prévu pour un ou plusieurs joueurs, comprenant :
la réception d'une requête de participation au jeu provenant d'un joueur du jeu électronique invitant l'utilisateur du dispositif terminal d'utilisateur à se joindre au jeu électronique, la requête de participation au jeu fournissant l'accès à des données de synchronisation de jeu permettant la synchronisation avec le jeu ;
le recouvrement des données de synchronisation de jeu ; et
l'activation du jeu électronique au moyen des données de synchronisation de jeu permettant à l'utilisateur de participer au jeu électronique ;
**caractérisé en ce que** le jeu électronique accessible à distance est un jeu électronique multijoueur en cours, joué par un ou plusieurs autres joueurs, auquel l'utilisateur est un joueur qui a déjà participé, la requête de participation au jeu étant initiée par un autre joueur du jeu multijoueur ;
chaque joueur participant au jeu électronique est associé à des données de profil de joueur caractérisant l'état du joueur respectif dans le jeu électronique, et le jeu électronique est associé à des informations d'état de jeu caractérisant l'état du jeu ;
la requête de participation au jeu fournit l'accès à des données de profil de joueur pour obtenir des données de profil de joueur actualisées du joueur invité à se joindre au jeu électronique et les données de synchronisation de jeu permettant la synchronisation avec le jeu électronique sont basées sur les informations d'état de jeu actualisées, les données de synchronisation de jeu permettant la synchronisation de l'exécution du jeu avec le jeu en cours ; et
les données de profil de joueur actualisées comprennent des données de profil de joueur caractérisant les dernières données de profil de joueur sauvegardées du joueur dans le jeu.

8. Procédé pour permettre à un utilisateur d'un dispositif terminal d'utilisateur de participer à un jeu électronique accessible à distance prévu pour un ou plusieurs joueurs, le procédé comprenant :
l'exécution du jeu conformément à des algorithmes de jeu, un signal de commande d'utilisateur généré en réponse à une action de l'utilisateur et des données de synchronisation de jeu; et
l'initiation d'une requête de participation au jeu invitant un joueur à se joindre au jeu électronique, la requête de participation au jeu fournissant l'accès aux données de synchronisation de jeu pour la synchronisation avec le jeu ;
**caractérisé en ce que** le jeu électronique accessible à distance est un jeu électronique multijoueur en cours, joué par un ou plusieurs autres joueurs, auquel l'utilisateur est un joueur qui a déjà participé, la requête de participation au jeu étant initiée par un autre joueur du jeu multijoueur ;
chaque joueur participant au jeu électronique est associé à des données de profil de joueur caractérisant l'état du joueur respectif dans le jeu électronique, et le jeu électronique est associé à des informations d'état de jeu caractérisant l'état du jeu ;
la requête de participation au jeu fournit l'accès à des données de profil de joueur pour obtenir des données de profil de joueur actualisées du joueur invité à se joindre au jeu électronique et les données de synchronisation de jeu permettant la synchronisation avec le jeu électronique sont basées sur les informations d'état de jeu actualisées, les données de synchronisation de jeu permettant la synchronisation de l'exécution du jeu avec le jeu en cours ; et
les données de profil de joueur actualisées comprennent des données de profil de joueur caractérisant les dernières données de profil de joueur sauvegardées du joueur dans le jeu.

9. Procédé pour permettre à un utilisateur d'un dispositif terminal d'utilisateur de participer à un jeu électronique accessible à distance prévu pour un ou plusieurs joueurs, le procédé comprenant :
l'exécution d'une application de jeu pour l'exécution du jeu électronique et la synchronisation de l'état du jeu sur des terminaux distants sur la base de données de synchronisation de jeu ;
l'établissement d'une requête de participation au jeu initiée par un joueur du jeu électronique pour inviter un joueur à se joindre au jeu électronique, la requête de participation au jeu fournissant l'accès à des données de synchronisation de jeu pour la synchronisation avec le jeu ; et
la transmission de la requête à un serveur de fournisseur de services réseau en vue de sa transmission à un dispositif terminal d'utilisateur ;
**caractérisé en ce que** le jeu électronique accessible à distance est un jeu électronique multijoueur en cours, joué par un ou plusieurs autres joueurs, auquel l'utilisateur est un joueur qui a déjà participé, la requête de participation au jeu étant initiée par un autre joueur du jeu multijoueur ;
chaque joueur participant au jeu électronique est associé à des données de profil de joueur caractérisant l'état du joueur respectif dans le jeu électronique, et le jeu électronique est associé à des informations d'état de jeu caractérisant l'état du jeu ;
la requête de participation au jeu fournit l'accès à des données de profil de joueur pour obtenir des données de profil de joueur actualisées du joueur invité à se joindre au jeu électronique et les données de synchronisation de jeu permettant la synchronisation avec le jeu électronique sont basées sur les informations d'état de jeu actualisées, les données de synchronisation de jeu permettant la synchronisation de l'exécution du jeu avec le jeu en cours ; et
les données de profil de joueur actualisées comprennent des données de profil de joueur caractérisant les dernières données de profil de joueur sauvegardées du joueur dans le jeu.

10. Produit-programme informatique pour un appareil programmable, le produit-programme informatique comprenant une séquence d'instructions pour mettre en œuvre un procédé selon l'une quelconque des revendications 7 à 9 quand il est chargé dans l'appareil programmable et exécuté par celui-ci.
